(19) Europäisches Patentamt / European Patent Office / Office européen des brevets

(11) **EP 1 961 778 B1**

(12) **EUROPEAN PATENT SPECIFICATION**

(45) Date of publication and mention
of the grant of the patent:
**05.12.2018 Bulletin 2018/49**

(21) Application number: **06834187.4**

(22) Date of filing: **07.12.2006**

(51) Int Cl.:
***C08F 297/04*** (2006.01)

(86) International application number:
**PCT/JP2006/324432**

(87) International publication number:
**WO 2007/069521 (21.06.2007 Gazette 2007/25)**

(54) **BLOCK COPOLYMER AND HYDROGENATED PRODUCT THEREOF**

BLOCKCOPOLYMER UND HYDRIERTES PRODUKT DAVON

COPOLYMÈRE BLOC ET PRODUIT HYDROGÉNÉ À PARTIR DUDIT COPOLYMÈRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.12.2005 JP 2005359763**

(43) Date of publication of application:
**27.08.2008 Bulletin 2008/35**

(73) Proprietor: **Kuraray Co., Ltd.**
**Okayama 710-8622 (JP)**

(72) Inventors:
• **SUZUKI, Kenji**
**Okayama 710-0801 (JP)**

• **SHACHI, Kenji**
**Kamisu-shi, Ibaraki 3140197 (JP)**

(74) Representative: **Müller-Boré & Partner**
**Patentanwälte PartG mbB**
**Friedenheimer Brücke 21**
**80639 München (DE)**

(56) References cited:
| | |
|---|---|
| **EP-A- 0 522 658** | **EP-A- 0 857 758** |
| **WO-A-87/03890** | **WO-A1-03/085010** |
| **FR-A- 2 445 223** | **JP-A- 1 115 978** |
| **JP-A- 2 058 514** | **JP-A- 01 115 978** |
| **JP-A- 02 058 514** | **JP-A- 58 019 376** |
| **JP-A- 58 019 377** | **JP-A- 63 502 754** |
| **JP-A- 2004 162 050** | **JP-A- 2004 162 050** |

**Description**

TECHNICAL FIELD

The present invention relates to an aromatic vinyl compound block copolymer and a hydrogenated product thereof.

BACKGROUND ART

Conventionally, aromatic vinyl compound block copolymers have been employed in various resin improvers, adhesives and the like by utilizing their excellent flexibility, adhesion properties and the like. However, aromatic vinyl compound block copolymers are themselves non-polar and non-reactive. Thus, while such copolymers exhibit affinity to nonpolar materials such as polyolefins, polystyrenes and petroleum softeners such as process oils, they do not exhibit affinity to polar materials such as engineering plastics or other such resins, inorganic compounds, or the like. Furthermore, since many engineering plastics generally have much better heat resistance than aromatic vinyl compound block copolymers, when an aromatic vinyl compound block copolymer is added as an improver, there are problems such as heat resistance deteriorating. Thus, there is a need to impart polarity, reactivity and heat resistance to aromatic vinyl compound block copolymers.

Methods which have been proposed for introducing a functional group into a polymer include: a method in which the active end during anionic polymerization of isoprene is reacted with carbon dioxide, a metal salt of $\alpha$-chloroacetic acid or the like so that a carboxyl group is introduced onto the end (Non-patent Document 1); a method in which a functionalized block copolymer is produced by reacting an aromatic vinyl compound block copolymer with an unsaturated carboxylic acid or derivative thereof in an extruder in the presence of a radical initiator (Patent Documents 1 and 2).

However, Non-Patent Document 1 does not actually describe any examples in which a carboxyl group is introduced into an aromatic vinyl compound block copolymer. Furthermore, the position of the carboxyl group introduced in this method is limited to the ends, meaning that it is not possible to introduce a large number of carboxyl groups. As a result, the effects of imparting polarity are small, and there are almost no effects of imparting heat resistance. Furthermore, while polarity is imparted with the methods of Patent Documents 1 and 2, since the introduction sites of a functional group are limited to an aliphatic chain, sufficient heat resistance is not expressed.

[Patent Document 1] Japanese Patent Application Laid-Open No. Sho 63-254119
[Patent Document 2] Japanese Patent Application Laid-Open No. Sho 64-79212
[Non-patent Document 1]Eur. Polym. J., 1992, Vol. 28, No. 7, p. 765

Document EP0857758 discloses a method which is similar to present method but in which a block copolymer containing styrene units is used.

Document JP2004162650 discloses the preparation of a block copolymer which has methylstyrene units as required by the present claims, which is then reacted with 1,9-nonanedioldyacrylate.

DISCLOSURE OF THE INVENTION

PROBLEMS TO BE SOLVED BY THE INVENTION

Accordingly, it is an object of the present invention to provide an aromatic vinyl compound block copolymer having polarity, reactivity and heat resistance.

MEANS FOR SOLVING THE PROBLEMS

According to the present invention, the above-described object can be achieved by providing:

(1) A block copolymer or hydrogenated product thereof having a polymer block A and a polymer block B, wherein:

the polymer block A mainly comprises an aromatic vinyl compound unit and the aromatic vinyl compound unit contains a styrene unit in which an alkyl group having at least one functional group selected from a carboxyl group and a group derived therefrom is bound to a benzene ring; and
the polymer block B mainly comprises a conjugated diene unit;
wherein the carboxyl group and the group derived therefrom are at least one group selected from the group consisting of a carboxyl group and a salt thereof, an ester group, an amide group, and an acid anhydride group; and

(3) A method for producing the block copolymer or hydrogenated product thereof according to (1), comprising:

adding an unsaturated compound having at least one functional group selected from a carboxyl group and a group derived therefrom to a block copolymer or hydrogenated product thereof (hereinafter, these are sometimes collectively referred to as "block copolymer $(I_0)$") having a polymer block $A_0$ and a polymer block $B_0$, wherein:

the polymer block $A_0$ comprises 70% by mass or more of an aromatic vinyl compound unit and the aromatic vinyl compound unit contains a styrene unit in which an alkyl group is bound to a benzene ring; and the polymer block $B_0$ comprises 70% by mass or more of a conjugated diene unit.

EFFECT OF THE INVENTION

According to the present invention, provided is a thermoplastic elastomer (aromatic vinyl compound block copolymer) having polarity and reactivity, and also having excellent heat resistance (e.g., permanent set at 70°C) due to having, in its hard block, a styrene unit in which an alkyl group having at least one functional group selected from a carboxyl group and a group derived therefrom is bound to a benzene ring.

BEST MODE FOR CARRYING OUT THE INVENTION

The present invention will now be described in more detail.

The block copolymer or hydrogenated product thereof according to the present invention is a block copolymer or hydrogenated product thereof (hereinafter, these are sometimes collectively referred to as "modified block copolymer (I)") having a polymer block A and a polymer block B. The polymer block A mainly comprises an aromatic vinyl compound unit. The aromatic vinyl compound unit contains a styrene unit in which an alkyl group having at least one functional group selected from a carboxyl group and a group derived therefrom (hereinafter, this is sometimes referred to as "functional group") is bound to a benzene ring. The polymer block B mainly comprises a conjugated diene unit. The block copolymer or hydrogenated product thereof according to the present invention is produced by adding an unsaturated compound having a functional group to the above-described block copolymer $(I_0)$.

Examples of such an aromatic vinyl compound unit which constitutes the polymer block $A_0$ in the block copolymer $(I_0)$ include units derived from styrene; $\alpha$-methylstyrene; $\beta$-methylstyrene; an alkylstyrene in which an alkyl group is bound to a benzene ring, such as o-alkylstyrene, m-alkylstyrene, p-alkylstyrene, 2,4-dialkylstyrene, 3,5-dialkylstyrene, and 2,4,6-trialkylstyrene; a halogenated alkylstyrene having one or more of the hydrogen atoms of the alkyl group in the alkylstyrene substituted with a halogen atom; a halogenated styrene, such as monofluorostyrene, difluorostyrene, monochlorostyrene, and dichlorostyrene; methoxystyrene, vinylnaphthalene, and vinylanthracene. Among these, preferred are units derived from styrene, $\alpha$-methylstyrene, an alkylstyrene in which an alkyl group is bound to a benzene ring, and a halogenated alkylstyrene (hereinafter, alkylstyrene and halogenated alkylstyrene are collectively referred to as "alkylstyrene").

The units derived from an alkylstyrene are preferably an alkylstyrene unit in which an alkyl group containing 1 to 8 carbon atoms is bound to a benzene ring. Examples thereof may include units derived from o-methylstyrene, m-methylstyrene, p-methylstyrene, 2,4-dimethylstyrene, 3,5-dimethylstyrene, 2,4,6-trimethylstyrene, o-ethylstyrene, m-ethylstyrene, p-ethylstyrene, 2,4-diethylstyrene, 3,5-diethylstyrene, 2,4,6-triethylstyrene, o-propylstyrene, m-propylstyrene, p-propylstyrene, 2,4-dipropylstyrene, 3,5-dipropylstyrene, 2,4,6-tripropylstyrene, 2-methyl-4-ethylstyrene, 3-methyl-5-ethylstyrene, o-chloromethylstyrene, m-chloromethylstyrene, p-chloromethylstyrene, 2,4-bis(chloromethyl)styrene, 3,5-bis(chloromethyl)styrene, 2,4,6-tri(chloromethyl)styrene, o-dichloromethylstyrene, m-dichloromethylstyrene, p-dichloromethylstyrene, and the like. The polymer block $A_0$ may have a unit derived from one or more of the examples described above as an alkylstyrene unit. Of these, a p-methylstyrene unit is preferred as the alkylstyrene unit, since it is readily available.

The polymer block $A_0$ in the block copolymer $(I_0)$ corresponds to the hard segments of a thermoplastic elastomer. The alkyl group bound to a benzene ring in an alkylstyrene unit serves to introduce a functional group into the hard segments of the block copolymer.

The proportion of the alkylstyrene unit in the polymer block $A_0$ is preferably 1% by mass or more, more preferably 10% by mass or more, and even more preferably 40% by mass or more based on the mass of the polymer block $A_0$ constituting the block copolymer $(I_0)$ (if the block copolymer $(I_0)$ has two or more polymer blocks $A_0$, then this is based on the total mass thereof). The polymer block $A_0$ may be made entirely of alkylstyrene units. If the proportion of alkylstyrene unit is less than 1% by mass, then the functional groups cannot be sufficiently introduced into the polymer block $A_0$. This means that the obtained block copolymer may not exhibit sufficient reactivity. In the polymer block A, the alkylstyrene unit may be linked to the other aromatic vinyl compound units either randomly, in blocks, or in a tapered manner.

Preferably, the amount of the polymer block $A_0$ contained in the block copolymer ($I_0$) is in the range of from 10% by mass to 40% by mass. If the amount is less than 10% by mass, then the ability of the hard blocks formed from the polymer block $A_0$ to aggregate and react deteriorates and the heat resistance of the obtained modified block copolymer tends to decrease. If the amount is greater than 40% by mass, then the flexibility of the obtained modified block copolymer tends to decrease.

The polymer block $A_0$ may include, along with the aromatic vinyl compound unit containing an alkylstyrene unit, a small amount of units derived from other polymerizable monomers, if necessary. In such a case, the proportion of units derived from other polymerizable monomers is 30% by mass or less, and more preferably 10% by mass or less based on the mass of the polymer block $A_0$ constituting the block copolymer ($I_0$) (if the block copolymer ($I_0$) has two or more polymer blocks $A_0$, then this is based on the total mass thereof). Examples of these other polymerizable monomers include butadiene, isoprene, and the like.

Examples of the conjugated diene from which a conjugated diene unit which constitutes the polymer block $B_0$ in the block copolymer ($I_0$) are derived include butadiene, isoprene, 2,3-dimethyl-1,3-butadiene, 1,3-pentadiene, 1,3-hexadiene, and the like. The polymer block B may be constituted solely by one kind of unit derived from these conjugated dienes, or it may be constituted by two or more kinds thereof. Among these, the polymer block $B_0$ is preferably constituted by units derived from butadiene, isoprene, or a mixture of butadiene and isoprene. It is noted that the kind and the amount of microstructure of the polymer block $B_0$ are not especially limited. When two or more conjugated dienes are used together, these dienes may be linked to one another either randomly, in blocks, in a tapered manner, or by two or more of these manners of linking.

The polymer block $B_0$ may include, along with the conjugated diene units, a small amount of structural units derived from other polymerizable monomers, if necessary. In such a case, the proportion of such other polymerizable monomer units is 30% by mass or less, and more preferably 10% by mass or less based on the mass of the polymer block $B_0$ constituting the block copolymer ($I_0$) (if the block copolymer ($I_0$) has two or more polymer blocks $B_0$, then this is based on the total mass thereof). Examples of such other polymerizable monomers include styrene, $\alpha$-methylstyrene, and the aforementioned alkylstyrenes constituting the alkylstyrene units (preferably, p-methylstyrene) and the like.

The polymer block $B_0$ is preferably: a polyisoprene block comprising isoprene units or a hydrogenated polyisoprene block in which some or all of the carbon-carbon double bonds originating from the isoprene units have been hydrogenated; a polybutadiene block comprising butadiene units or a hydrogenated polybutadiene block in which some or all of the carbon-carbon double bonds originating from the butadiene units have been hydrogenated; or an isoprene/butadiene copolymer block comprising isoprene units and butadiene units or a hydrogenated isoprene/butadiene copolymer block in which some or all of the carbon-carbon double bonds originating from the isoprene units and butadiene units have been hydrogenated.

In the block copolymer ($I_0$), a manner of linking of the polymer block $A_0$ and the polymer block $B_0$ is not especially limited, so long as they are linked to one another. The manner of linking may be any of linear, branched, radial, or a combination of two or more of these. Preferably, the polymer block $A_0$ and the polymer block $B_0$ are linked together in a linear manner. Letting the polymer block $A_0$ be "A" and the polymer block $B_0$ be "B", examples include triblock copolymers as represented by A-B-A, tetrablock copolymers as represented by A-B-A-B and pentablock copolymers as represented by A-B-A-B-A. Of these, triblock copolymers ("A-B-A") are preferably used, because of the flexibility and ready production of the block copolymer ($I_0$).

While the number average molecular weight of the block copolymer ($I_0$) is not especially limited, it is preferably in the range of from 30,000 to 1,000,000, and more preferably in the range of from 40,000 to 200,000. The term "number average molecular weight" as used herein means the number average molecular weight as determined by gel permeation chromatography (GPC) using polystyrene standards.

The block copolymer ($I_0$) can be produced, for example, by a known anionic polymerization technique such as that described below. Specifically, using an initiator such as an alkyllithium compound, the alkylstyrene from which the alkylstyrene units are derived, or a mixture of this alkylstyrene and an aromatic vinyl compound, and the conjugated diene compound are sequentially polymerized to produce a block copolymer (i.e., a non-hydrogenated block copolymer ($I_0$)). The reaction is carried out in an organic solvent, such as n-hexane and cyclohexane, that is inert to the polymerization reaction.

When necessary, the obtained non-hydrogenated block copolymer may be further hydrogenated. This hydrogenation reaction of the block copolymer can be carried out in a saturated hydrocarbon solvent, such as cyclohexane, typically under a reaction temperature of 20°C to 100°C and a hydrogen pressure of 0.1 MPa to 10 MPa in the presence of a hydrogenation catalyst, giving a hydrogenated product of the block copolymer (i.e., the hydrogenated block copolymer ($I_0$)). Examples of the hydrogenation catalyst include: a Raney nickel; a heterogeneous catalyst containing a metal, such as platinum, palladium, ruthenium, rhodium and nickel, on a carrier of, for example, carbon, alumina or diatomaceous earth; a Ziegler catalyst combining an organometallic compound comprising a group 9 or 10 metal, such as nickel and cobalt, and an organoaluminum compound, such as triethylaluminum and triisobutylaluminum, or an organolithium compound; and a metallocene catalyst combining a bis(cyclopentadienyl) compound of a transition metal, such as titanium, zirconium and hafnium, and an organometallic compound comprising lithium, sodium, potassium, aluminum, zinc, magnesium, or the like.

The degree of hydrogenation can be appropriately adjusted according to the physical properties demanded for the modified block copolymer of the present invention. However, when emphasizing heat resistance and the like, and when it is desired to increase the introduced amount of functional groups into the polymer block $A_0$, preferably 80% or more of the carbon-carbon double bonds originating from the conjugated diene units of the polymer block $B_0$ constituting the block copolymer ($I_0$) are hydrogenated. As the degree of hydrogenation, 90% or more is more preferable, and 95% or more is even more preferable. The degree of hydrogenation of the carbon-carbon double bonds originating from the conjugated diene units of the polymer block B can be calculated from the measured values of the amount of carbon-carbon double bonds in the polymer block $B_0$ before and after the hydrogenation reaction using measuring means such as iodimetry, an infrared spectrophotometry, nuclear magnetic resonance, and the like.

The modified block copolymer (I), which is a block copolymer or hydrogenated product thereof having a polymer block A and a polymer block B, wherein: the polymer block A mainly comprises an aromatic vinyl compound unit and the aromatic vinyl compound unit contains a styrene unit in which an alkyl group having at least one functional group selected from a carboxylic group and a group derived therefrom is bound to a benzene ring; and the polymer block B mainly comprises a conjugated diene unit, can be produced by adding an unsaturated compound (a compound having a carbon-carbon double bond) having at least one functional group selected from a carboxyl group and a group derived therefrom to the block copolymer ($I_0$). Examples of the functional group include a carboxyl group and a salt thereof, an ester group, an amide group, an acid anhydride group, and the like. Examples of the unsaturated compound having a functional group include an unsaturated carboxylic acid such as maleic acid, fumaric acid, itaconic acid, (meth)acrylic acid, and cis-1-cyclohexene-1,2-dicarboxylic acid; a salt of these, such as a metal salt, an ester, or an amide thereof; an acid anhydride such as maleic anhydride; maleimide, and the like. Among these, maleic anhydride is preferred, as it is readily available and has excellent reactivity. The unsaturated compound having a functional group may be used alone or in combination of two or more. Furthermore, the modified block copolymer (I) can also be produced by adding an acid anhydride, such as maleic anhydride, an unsaturated carboxylic acid, such as (meth)acrylic acid, or a derivative thereof, such as an ester, in the same manner as described above to the block copolymer ($I_0$), then hydrolyzing the resultant and neutralizing as required.

Furthermore, the modified block copolymer (I) may be crosslinked. A crosslinked modified block copolymer (I) can be produced by a method such as the following. For example, an acid anhydride, such as maleic anhydride, or maleimide is added in the same manner as described above to the block copolymer ($I_0$), and then the resultant is amidated with ammonia; monoamines, such as methylamine and ethylamine; diamines, such as ethylene diamine, 1,4-butanediamine, 1,6-hexanediamine, 1,8-octanediamine, 1,9-nonanediamine; or polyvalent amines, such as triaminopyrimidine, or esterified with diols, such as ethylene glycol, 1,4-butanediol, 1,8-octanediol and 1,9-nonanediol; or polyhydric alcohols, such as glycerin, pentaerythritol and trimethylolpropane to produce a chemically-crosslinked modified block copolymer (I). Furthermore, an ion-crosslinked modified block copolymer (I) can be produced by adding an acid anhydride, such as maleic anhydride, in the same manner as described above to the block copolymer ($I_0$), and then after hydrolyzing the resultant, or after adding an unsaturated carboxylic acid, such as (meth)acrylic acid, in the same manner as described above, neutralizing the resultant with ammonia; monoamines, such as methylamine and ethylamine; diamines, such as ethylene diamine, 1,4-butanediamine, 1,6-hexanediamine, 1,8-octanediamine, 1,9-nonanediamine; polyvalent amines, such as triaminopyrimidine; metal hydroxides, such as sodium hydroxide, potassium hydroxide, magnesium hydroxide, calcium hydroxide, zinc hydroxide, aluminum hydroxide; metal alkoxides, such as sodium alkoxide, magnesium alkoxide; or organometallic compounds, such as butyllithium, dibutylmagnesium, triethylaluminum, triisobutylaluminum. From this crosslinking, the heat resistance of the modified block copolymer (I) can be improved.

In the above-described addition reaction, as a result of the unsaturated compound having a functional group being added into the alkyl styrene unit included in the polymer block $A_0$ of the block copolymer ($I_0$), a styrene unit in which an alkyl group having a functional group is bound to a benzene ring (hereinafter, sometimes referred to as "functionalized alkylstyrene unit") is formed. This styrene unit is included in the polymer block A of the modified block copolymer (I). The amount of the functionalized alkyl styrene unit contained in the block copolymer (I) based on 1 mole of the block copolymer (I) is preferably in the range of from 2.0 moles to 50 moles, more preferably in the range of from 2.1 moles to 50 moles, and even more preferably in the range of from 3 moles to 25 moles. If the amount is less than 2.0 moles, it is difficult for the improvements in heat resistance and the like of the modified block copolymer (I) to be expressed based on those of the block copolymer ($I_0$). On the other hand, even if the amount is more than 50 moles, there is almost no extra improvement in heat resistance and the like. The amount of the functionalized alkylstyrene unit contained in the polymer block A can be measured by nuclear magnetic resonance. Specifically, the number of the proton on the carbons which are the reaction point in the polymer block $A_0$ are measured before and after the addition reaction of the unsaturated compound having a functional group. The amount can be calculated from the change. In addition, the amount of the functionalized alkylstyrene unit contained in the polymer block A can also be determined by acidimetry, an infrared spectrophotometry and the like.

If an unsaturated compound having a functional group is added to the block copolymer ($I_0$), it is preferable to use a radical initiator as an additive. Examples of the radical initiator include $\alpha,\alpha'$-di(t-butylperoxy)diisopropylbenzene, 2,5-dimethyl-2,5-di(t-butylperoxy)hexane, 2,5-dimethyl-2,5-bis(t-butylperoxy)hexyne-3, dicumyl peroxide, n-butyl 4,4-di(t-butylperoxy)valerate, di-t-butyl peroxide, di-t-hexyl peroxide, t-butylhydroxy peroxide, 1,1-di(t-butylperoxy)cyclohexane, dibenzoyl peroxide, dilauryl peroxide, peracetic acid, hydrogen peroxide, and the like. Among these, preferred are $\alpha,\alpha'$-di(t-butylperoxy)diisopropylbenzene and 2,5-dimethyl-2,5-di(t-butylperoxy)hexane. The radical initiator may be used alone or in combination of two or more.

In addition to the above-described method for using the radical initiator as an additive, the unsaturated compound having a functional group can also be added to the block copolymer ($I_0$) by irradiating with active energy rays. Examples of the active energy rays include particle beams, electromagnetic waves, and combinations thereof. Examples of particle beams include an electron beam (EB) and $\alpha$-rays. Examples of electromagnetic waves include ultraviolet rays (UV), visible light, infrared rays, $\gamma$-rays, and X-rays. Among these, an electron beam, ultraviolet rays, and $\gamma$-rays are preferred. If irradiating with ultraviolet rays, it is preferable to use a photopolymerization initiator, such as benzophenone. These active energy rays can be irradiated using a publicly known device. The accelerating voltage in the case of an electron beam may be in the range of from 0.1 MeV to 10 MeV, and the exposure dose may be in the range of from 1 kGy to 500 kGy. In the case of ultraviolet rays, a lamp having a radiation wavelength of from 200 nm to 450 nm may be preferably used as the ray source. As the ray source, examples for an electron beam include a tungsten filament; and for ultraviolet rays include a low pressure mercury lamp, a high pressure mercury lamp, a mercury lamp for ultraviolet rays, a carbon arc lamp, a xenon lamp, a zirconium lamp, and the like.

In the present method, the unsaturated compound having a functional group may be added not only to the units of the polymer block $A_0$, but also to the units of the polymer block $B_0$ as well. However, this in no way hinders the present invention.

The proportion of the unsaturated compound having a functional group to the block copolymer ($I_0$) used in the above-described addition reaction is, based on 1 mole of the block copolymer ($I_0$), from 2.0 moles to 50 moles of the unsaturated compound having a functional group, more preferably from 2.1 moles to 50 moles, and even more preferably from 3 moles to 25 moles. Furthermore, when using a radical initiator, based on 1 mole of unsaturated compound having a functional group, it is preferred to use 0.001 moles to 0.25 moles, and more preferably 0.01 moles to 0.25 moles.

The modified block copolymer (I) of the present invention may be used as an improver of flexibility, shock resistance, and heat resistance of a thermoplastic resin. Examples of the thermoplastic resin to be improved include homopolymers, such as polyethylene and polypropylene; ethylene-$\alpha$-olefin copolymers, such as an ethylene propylene copolymer, an ethylene-1-butene copolymer, an ethylene-1-hexene copolymer, an ethylene-1-heptene copolymer, and an ethylene-1-octene copolymer; polyolefin resins, such as an ethylene-vinylacetate copolymer, an ethylene-acrylate copolymer, and an ethylene-methacrylate copolymer; styrene resins, such as polystyrene, acrylonitrile-styrene resin, and acrylonitrile-butadienestyrene resin; acrylic resins, such as polyacrylate resin and a polymethacrylate copolymer; polyphenylene ether resins; polymethylene ether resins; polycarbonate resins; polyvinyl chloride resins; polyvinyl acetate resins; polyester resins, such as polyethylene terephthalate, polybutylene terephthalate, polylactic acid, and polycaprolactone; polyamide resins, such as polyamide 6, polyamide 6,6, polyamide 6,10, polyamide 11, polyamide 12, polyamide 6,12, and polyhexamethylenediamine terephthalamide, and the like.

An inorganic filler may optionally be added to the modified block copolymer (I) of the present invention for purposes such as imparting heat resistance, imparting flame resistance, strengthening rigidity, and filling. Examples of the inorganic filler include talc, glass fiber, mica, kaolin, clay, calcium silicate, glass, glass hollow spheres, calcium carbonate, magnesium carbonate, aluminum hydroxide, magnesium hydroxide, calcium aluminate, calcium hydroxide, zinc borate, dawsonite, ammonium polyphosphate, hydrotalcites, silica, alumina, titanium oxide, iron oxide, zinc oxide, magnesium oxide, tin oxide, antimony oxide, barium ferrite, strontium ferrite, and the like.

An softener may be added to the modified block copolymer (I) of the present invention, when necessary. Examples of the softener include petroleum softeners such as paraffinic, naphthenic and aromatic process oils, paraffin, vegetable oil softeners such as peanut oil and rosin, and the like. These softeners may be used alone or in admixture of two or more. The amount of added softener is not especially limited, so long as the intent of the present invention is not harmed. Usually it is not greater than 300 parts by mass based on 100 parts by mass of the modified block copolymer (I), and is preferably not greater than 100 parts by mass.

Other polymers may be added to the modified block copolymer (I) of the present invention for the purpose of improving flexibility, fluidity, and the like to the extent that the intent of the present invention is not harmed. Examples of such polymers include natural rubber, synthetic polyisoprene rubber, liquid polyisoprene rubber and a hydrogenated product thereof, polybutadiene rubber, liquid polybutadiene rubber and a hydrogenated product thereof, styrene-butadiene rubber, chloroprene rubber, ethylene-propylene rubber, acrylic rubber, isoprene-isobutylene rubber, acrylonitrile-butadiene rubber, styrenic elastomers such as a polystyrene-polyisoprene-polystyrene block copolymer or a polystyrene-polybutadiene-polystyrene block copolymer and hydrogenated products thereof, and the like.

Other additives may be added to the modified block copolymer (I) of the present invention to the extent that the intent of the present invention is not harmed. Examples of such additives include a heat stabilizer, a light stabilizer, an ultraviolet ray absorber, an antioxidant, a lubricant, a colorant, an antistatic agent, a fire retardant, a foaming agent, a water repellent, a waterproofing agent, a tackifier, a fluorescent agent, an antiblocking agent, a metal deactivator, an antimicrobial agent, and the like.

EXAMPLES

The present invention will now be described in more detail by the following examples. However, the present invention is not limited to these examples.

1) Acid value

One gram of modified block copolymer and 1 mg of phenolphthalein were dissolved in 200 mL of toluene in a 500 mL conical flask. Then, using a burette, a 0.05 mol/L solution of potassium hydroxide in ethanol was added dropwise thereto. The acid value was calculated using the following equation from the amount added dropwise.

$$\text{Acid value (mg/g)} = 0.05 \times 56 \times V$$

V: Amount added dropwise (L) of the solution of potassium hydroxide in ethanol

2) Mechanical characteristics (strength at break, elongation at break)

According to the methods described in JIS K6251, a 15 cm $\times$ 15 cm $\times$ 0.1 cm sheet was produced by pressing a modified block copolymer or block copolymer obtained in the Examples or Comparative Examples for 3 minutes at 230°C and 10 MPa, a test piece having a No. 5 dumbbell shape was fabricated from the obtained sheet, and then using an Instron universal tester, the test piece underwent tension testing at a tension rate of 500 mm/min at a temperature of 23°C to measure the strength at break (MPa) and elongation at break (%).

3) Permanent set

Gauge lines of 2.5 cm interval were marked on the JIS K6251 standard test piece having a No. 5 dumbbell shape fabricated in the same manner described in the above 2). The test piece was then subjected to 100% stretching at an ambient temperature of 70°C. The test piece was held for 24 hours, and then released. After 30 minutes, the length between the gauge lines was measured ($L_1$ (cm)). The permanent set was calculated according to the following equation for use as an index for heat resistance.

$$\text{Permanent set (\%)} = 100 \times (L_1 - 2.5)/2.5$$

Example 1

A pressure-resistant vessel equipped with a stirring apparatus was charged with 39 kg of cyclohexane and 265 mL of sec-butyllithium (11% by mass, in cyclohexane solution). The resultant solution was charged with 2.25 kg of p-methylstyrene over a 30-minute period. Polymerization was allowed to proceed at 50°C for 30 minutes. The solution was charged with 100 g of tetrahydrofuran, and then charged with 10.5 kg of 1,3-butadiene over a 60-minute period. Polymerization was allowed to proceed at 50°C for 30 minutes. The solution was charged with a further 2.25 kg of p-methylstyrene over a 30-minute period, and polymerization was allowed to proceed at 50°C for 30 minutes. This gave a reaction mixture containing a poly(p-methylstyrene)-polybutadiene-poly(p-methylstyrene) triblock copolymer. The obtained block copolymer had a number average molecular weight of 87,000, and the amount of p-methylstyrene unit as determined by $^1$H-NMR was 30% by mass.

The resulting reaction mixture containing the block copolymer was charged with a hydrogenation catalyst, which had been prepared from 56 g of nickel octanoate (64% by mass, in cyclohexane solution) and 380 g of triisopropylaluminum (20% by mass, in cyclohexane solution). The hydrogenation reaction was allowed to proceed at 80°C in a hydrogen atmosphere of 1 MPa. This gave a hydrogenated product of the above-described poly(p-methylstyrene)-polybutadiene-poly(p-methylstyrene) triblock copolymer (hereinafter, this is referred to as "block copolymer $I_0$-1"). The obtained block copolymer $I_0$-1 had a number average molecular weight of 90,000, and the amount of p-methylstyrene unit and the degree of hydrogenation as determined by $^1$H-NMR were 29% by mass and 97%, respectively.

Next, 10 kg of the block copolymer $I_0$-1, 200 g of maleic anhydride, and 10 g of $\alpha,\alpha'$-di(t-butylperoxy)diisopropylbenzene were mixed together, and the resultant mixture was melt-kneaded using a twin screw extruder at 230°C. The mixture was then dissolved in THF, and the resultant solution was treated with methanol for reprecipitation. This gave a maleic acid derivative modified product of a hydrogenated product of the poly(p-methylstyrene)-polybutadiene-poly(p-methylstyrene) triblock copolymer (hereinafter, referred to as "modified block copolymer I-1"). The acid value of the obtained modified block copolymer I-1 was 10 (mg/g), meaning that 10 maleic anhydrides were added per one molecule of the modified block copolymer I-1. It was found from $^1$H-NMR determination that 3 mol% of the protons of the p-methyl groups had shifted to a lower magnetic field, meaning that 4 maleic anhydrides per one molecule of the modified block copolymer I-1 were added to the polymer block A. Using the modified block copolymer I-1, the above-described physical properties were evaluated. The results are shown in Table 1.

Example 2

The modified block copolymer I-1 obtained in Example 1 was dissolved in THF, and the resultant solution was then charged with 0.5 parts by mass of magnesium hydroxide based on the modified block copolymer I-1. The solution was treated with methanol for reprecipitation, to give a magnesium salt of a maleic acid derivative modified product of a hydrogenated product of the poly(p-methylstyrene)-polybutadiene-poly(p-methylstyrene) triblock copolymer (hereinafter, referred to as "modified block copolymer I-2"). Using the modified block copolymer I-2, the above-described physical properties were evaluated. The results are shown in Table 1.

Example 3

Ten kilograms of the block copolymer $I_0$-1 obtained in Example 1, 200 g of maleic anhydride, and 10 g of $\alpha,\alpha'$-di(t-butylperoxy)diisopropylbenzene were mixed together, and the resultant mixture was melt-kneaded using a twin screw extruder at 230°C. Then, 5 kg of the obtained modified block copolymer, 100 g of maleic anhydride, and 10 g of $\alpha,\alpha'$-di(t-butylperoxy)diisopropylbenzene were mixed together, and the resultant mixture was again melt-kneaded using a twin screw extruder at 230°C. The mixture was then dissolved in THF, and the resultant solution was treated with methanol for reprecipitation. This gave a maleic acid derivative modified product of a hydrogenated product of the poly(p-methylstyrene)-polybutadiene-poly(p-methylstyrene) triblock copolymer (hereinafter, referred to as "modified block copolymer I-3"). The acid value of the obtained modified block copolymer I-3 was 20 (mg/g), meaning that 20 maleic anhydrides were added per one molecule of the modified block copolymer I-3. It was found from $^1$H-NMR determination that 6 mol% of the protons of the p-methyl groups had shifted to a lower magnetic field, meaning that 8 maleic anhydrides per one molecule of the modified block copolymer I-3 were added to the polymer block A. Using the modified block copolymer I-3, the above-described physical properties were evaluated. The results are shown in Table 1.

Example 4

The modified block copolymer I-3 obtained in Example 3 was dissolved in THF, and the resultant solution was then charged with 1.0 part by mass of magnesium hydroxide based on the modified block copolymer I-3. The solution was treated with methanol for reprecipitation, to give a magnesium salt of a maleic acid derivative modified product of a hydrogenated product of the poly(p-methylstyrene)-polybutadiene-poly(p-methylstyrene) triblock copolymer (hereinafter, referred to as "modified block copolymer 1-4"). Using the modified block copolymer I-4, the above-described physical properties were evaluated. The results are shown in Table 1.

Example 5

Four kilograms of the block copolymer $I_0$-1 obtained in Example 1, 40 g of maleic anhydride, and 3.2 g of $\alpha,\alpha'$-di(t-butylperoxy)diisopropylbenzene were mixed together, and the resultant mixture was melt-kneaded using a twin screw extruder at 230°C. The mixture was then dissolved in THF, and the resultant solution was treated with methanol for reprecipitation. This gave a maleic acid derivative modified product of a hydrogenated product of the poly(p-methylstyrene)-polybutadiene-poly(p-methylstyrene) triblock copolymer (hereinafter, referred to as "modified block copolymer I-5"). The acid value of the obtained modified block copolymer I-1 was 3 (mg/g), meaning that 3 maleic anhydrides were added per one molecule of the modified block copolymer I-5. It was found from $^1$H-NMR determination that 1 mol% of the protons of the p-methyl groups had shifted to a lower magnetic field, meaning that 1.2 maleic anhydrides per one molecule of the modified block copolymer I-5 were added to the polymer block A. Using the modified block copolymer I-5, the above-described physical properties were evaluated. The results are shown in Table 1.

Example 6

The modified block copolymer I-5 obtained in Example 5 was dissolved in THF, and the resultant solution was then charged with 0.15 parts by mass of magnesium hydroxide based on the modified block copolymer I-5. The solution was treated with methanol for reprecipitation, to give a magnesium salt of a maleic acid derivative modified product of a hydrogenated product of the poly(p-methylstyrene)-polybutadiene-poly(p-methylstyrene) triblock copolymer (hereinafter, referred to as "modified block copolymer I-6"). Using the modified block copolymer I-6, the above-described physical properties were evaluated. The results are shown in Table 1.

Comparative Example 1

A pressure-resistant vessel equipped with a stirring apparatus was charged with 39 kg of cyclohexane and 265 mL of sec-butyllithium (11% by mass, in cyclohexane solution). The resultant solution was charged with 2.25 kg of styrene over a 30-minute period. Polymerization was allowed to proceed at 50°C for 30 minutes. The solution was charged with 100 g of tetrahydrofuran, and then charged with 10.5 kg of 1,3-butadiene over a 60-minute period. Polymerization was allowed to proceed at 50°C for 30 minutes. The solution was charged with a further 2.25 kg of styrene over a 30-minute period, and polymerization was allowed to proceed at 50°C for 30 minutes. This gave a reaction mixture containing a polystyrene-polybutadiene-polystyrene triblock copolymer. The obtained block copolymer had a number average molecular weight of 87,000, and the amount of styrene unit as determined by $^1$H-NMR was 30% by mass.
The resulting reaction mixture containing the block copolymer was charged with a hydrogenation catalyst, which had been prepared from 56 g of nickel octanoate (64% by mass, in cyclohexane solution) and 380 g of triisopropylaluminum (20% by mass, in cyclohexane solution), and the hydrogenation reaction was allowed to proceed at 80°C in a hydrogen atmosphere of 1 MPa. This gave a hydrogenated product of the above-described polystyrene-polybutadiene-polystyrene triblock copolymer (hereinafter, referred to as "block copolymer 1"). The obtained block copolymer 1 had a number average molecular weight of 90,000, and the amount of styrene unit and the degree of hydrogenation as determined by $^1$H-NMR were 29% by mass and 97%, respectively.
Next, 10 kg of the block copolymer 1, 200 g of maleic anhydride, and 10 g of $\alpha,\alpha'$-di(t-butylperoxy)diisopropylbenzene were mixed together, and the resultant mixture was melt-kneaded using a twin screw extruder at 230°C. The mixture was then dissolved in THF, and the resultant solution was treated with methanol for reprecipitation. This gave a maleic acid derivative modified product of a hydrogenated product of the polystyrene-polybutadiene-polystyrene triblock copolymer (hereinafter, referred to as "modified block copolymer 1"). The acid value of the obtained modified block copolymer 1 was 10 (mg/g), meaning that 10 maleic anhydrides were added per one molecule of the block copolymer 1. Using the modified block copolymer 1, the above-described physical properties were evaluated. The results are shown in Table 2.

Comparative Example 2

The modified block copolymer 1 obtained in Comparative Example 1 was dissolved in THF, and the resultant solution was then charged with 0.5 parts by mass of magnesium hydroxide based on the modified block copolymer 1. The solution was treated with methanol for reprecipitation, to give a magnesium salt of a maleic acid derivative modified product of a hydrogenated product of the polystyrene-polybutadiene-polystyrene triblock copolymer (hereinafter, referred to as "modified block copolymer 2"). Using the modified block copolymer 2, the above-described physical properties were evaluated. The results are shown in Table 2.

Comparative Example 3

The above-described physical properties were evaluated using the block copolymer $I_0$-1 produced in Example 1. The results are shown in Table 2.

Comparative Example 4

The above-described physical properties were evaluated using the block copolymer 1 produced in Comparative Example 1. The results are shown in Table 2.

[Table 1]

|  | Example 1 | Example 2 | Example 3 | Example 4 | Example 5 | Example 6 |
|---|---|---|---|---|---|---|
| Strength at break (MPa) | 28 | 30 | 29 | 30 | 26 | 27 |
| Elongation at break (%) | 600 | 580 | 590 | 570 | 550 | 550 |
| Permanent set (70°C) (%) | 80 | 70 | 70 | 60 | 90 | 90 |

[Table 2]

|  | Comparative Example 1 | Comparative Example 2 | Comparative Example 3 | Comparative Example 4 |
|---|---|---|---|---|
| Strength at break (MPa) | 24 | 25 | 24 | 26 |
| Elongation at break (%) | 550 | 470 | 500 | 550 |
| Permanent set (70°C) (%) | fractured* | fractured | fractured | fractured |
| * Test piece fractured during stretching of the test piece. | | | | |

The following can be understood from the results shown in Tables 1 and 2. In the permanent set test at 70°C., test pieces made from the modified block copolymer 1, modified block copolymer 2, block copolymer $I_0$-1, and block copolymer 1 of the Comparative Examples 1 to 4, which did not have in the hard block an alkylstyrene unit having a functional group, fractured during stretching of the test piece. In contrast, the modified block copolymers I-1 to I-6 obtained in Examples 1 to 6 had low permanent set at 70°C and it is recognized that these modified block copolymers I-1 to I-6 had better heat resistance than the modified block copolymer 1, modified block copolymer 2, block copolymer $I_0$-1, and block copolymer 1.

INDUSTRIAL APPLICABILITY

The modified block copolymer according to the present invention can be employed in polar resin improvers, dispersibility improvers of inorganic fillers, and the like by utilizing its polarity, reactivity, and heat resistance.

**Claims**

1. A method for producing a block copolymer or hydrogenated product thereof having a polymer block A and a polymer block B, wherein the polymer block A mainly comprises an aromatic vinyl compound unit and the aromatic vinyl compound unit contains a styrene unit in which an alkyl group having at least one functional group selected from a carboxyl group and a group derived therefrom is bound to a benzene ring and the polymer block B mainly comprises a conjugated diene unit, comprising:

adding a compound having a carbon-carbon double bond and having at least one functional group selected from a carboxyl group and a group derived therefrom to a block copolymer ($I_0$) or hydrogenated product thereof having a polymer block $A_0$ and a polymer block $B_0$, wherein:

the polymer block $A_0$ comprising an aromatic vinyl compound unit in an amount of 70 % by mass or more, based on the mass of the polymer block $A_0$, and the aromatic vinyl compound unit containing an alkylstyrene unit in which an alkyl group is bound to a benzene ring;
the polymer block $B_0$ comprising a conjugated diene unit in an amount of 70 % by mass or more, based on the mass of the polymer block $B_0$;
the compound having a carbon-carbon double bond and having at least one functional group being used in an amount of from 2.0 moles to 50 moles based on 1 mole of the block copolymer ($I_0$), and
melt-kneading and reacting the block copolymer ($I_0$) and the compound having a carbon-carbon double bond and having at least one functional group in a mixer in the presence of a radical initiator at 120 °C to 280 °C,
the radical initiator being used in an amount of from 0.001 to 0.25 mole based on 1 mole of the compound having a carbon-carbon double bond and having at least one functional group;

wherein the carboxyl group and the group derived therefrom are at least one group selected from the group consisting of a carboxyl group and a salt thereof, an ester group, an amide group, and an acid anhydride group.

**2.** A block copolymer or hydrogenated product thereof obtained by a method according to claim 1.

## Patentansprüche

**1.** Verfahren zum Herstellen eines Blockcopolymers oder eines hydrierten Produkts davon, aufweisend einen Polymerblock A und einen Polymerblock B, wobei der Polymerblock A hauptsächlich eine aromatische Vinylverbindungseinheit umfasst und die aromatische Vinylverbindungseinheit eine Styroleinheit enthält, in welcher eine Alkylgruppe, aufweisend mindestens eine funktionelle Gruppe, ausgewählt aus einer Carboxylgruppe und einer davon abgeleiteten Gruppe, an einen Benzolring gebunden ist, und der Polymerblock B hauptsächlich eine konjugierte Dieneinheit umfasst, umfassend:

das Zugeben einer Verbindung, aufweisend eine Kohlenstoff-Kohlenstoff-Doppelbindung und aufweisend mindestens eine funktionelle Gruppe, ausgewählt aus einer Carboxylgruppe und einer davon abgeleiteten Gruppe, zu einem Blockcopolymer ($I_0$) oder einem hydrierten Produkt davon, aufweisend einen Polymerblock $A_0$ und einen Polymerblock $B_0$, wobei:

der Polymerblock $A_0$ eine aromatische Vinylverbindungseinheit in einer Menge von 70 Massen% oder mehr, basierend auf der Masse des Polymerblocks $A_0$, umfasst und die aromatische Vinylverbindungseinheit eine Alkylstyroleinheit enthält, in welcher eine Alkylgruppe an einen Benzolring gebunden ist;
der Polymerblock $B_0$ eine konjugierte Dieneinheit in einer Menge von 70 Massen% oder mehr, basierend auf der Masse des Polymerblocks $B_0$, umfasst;
die Verbindung, aufweisend eine Kohlenstoff-Kohlenstoff-Doppelbindung und aufweisend mindestens eine funktionelle Gruppe, in einer Menge von 2,0 Mol bis 50 Mol, basierend auf 1 Mol des Blockcopolymers ($I_0$), verwendet wird,
und
das Schmelzkneten und Umsetzen des Blockcopolymers ($I_0$) und der Verbindung, aufweisend eine Kohlenstoff-Kohlenstoff-Doppelbindung und aufweisend mindestens eine funktionelle Gruppe, in einem Mischer in der Gegenwart eines Radikalstarters bei 120 °C bis 280 °C,
wobei der Radikalstarter in einer Menge von 0,001 bis 0,25 Mol, basierend auf 1 Mol der Verbindung, aufweisend eine Kohlenstoff-Kohlenstoff-Doppelbindung und aufweisend mindestens eine funktionelle Gruppe, verwendet wird;

wobei die Carboxylgruppe und die davon abgeleitete Gruppe mindestens eine Gruppe, ausgewählt aus der Gruppe, bestehend aus einer Carboxylgruppe und einem Salz davon, einer Estergruppe, einer Amidgruppe und einer Säureanhydridgruppe, ist.

**2.** Blockcopolymer oder hydriertes Produkt davon, erhalten durch ein Verfahren nach Anspruch 1.

## Revendications

**1.** Procédé de production d'un copolymère séquencé ou de son produit d'hydrogénation, comportant une séquence polymère A et une séquence polymère B, où la séquence polymère A contient essentiellement une unité vinylaromatique et l'unité vinylaromatique comprend une unité styrène dans laquelle un groupe alkyle ayant au moins un groupe fonctionnel choisi parmi un groupe carboxyle et un groupe dérivé de celui-ci est lié à un cycle benzénique, et où la séquence polymère B contient essentiellement une unité diène conjuguée, comprenant :

l'addition d'un composé ayant une double liaison carbone-carbone et ayant au moins un groupe fonctionnel choisi parmi un groupe carboxyle et un groupe dérivé de celui-ci pour obtenir un copolymère séquencé ($I_0$) ou

son produit d'hydrogénation, comportant une séquence polymère $A_0$ et une séquence polymère $B_0$, où :

la séquence polymère $A_0$ contient une unité vinylaromatique en une quantité de 70% en masse ou plus, sur base de la masse de la séquence polymère $A_0$, et l'unité vinylaromatique comprend une unité alkylstyrène dans laquelle un groupe alkyle est lié à un cycle benzénique,
la séquence polymère $B_0$ contient une unité diène conjuguée en une quantité de 70% en masse ou plus, sur base de la masse de la séquence polymère $B_0$ ;
le composé ayant une double liaison carbone-carbone et ayant au moins un groupe fonctionnel étant utilisé en une quantité allant de 2,0 moles à 50 moles, sur base de 1 mole du copolymère séquencé ($I_0$), et
le malaxage à l'état fondu et la réaction du copolymère séquencé ($I_0$) et du composé ayant une double liaison carbone-carbone et ayant au moins un groupe fonctionnel dans un mélangeur en présence d'un initiateur de radicaux de 120°C à 280°C,

l'initiateur de radicaux étant utilisé en une quantité allant de 0,001 à 0,25 mole sur base de 1 mole du composé ayant une double liaison carbone-carbone et ayant au moins un groupe fonctionnel ;
où le groupe carboxyle et le groupe dérivé de celui-ci sont au moins un groupe choisi parmi le groupe consistant en un groupe carboxyle et un sel de celui-ci, un groupe ester, un groupe amide et un groupe anhydride d'acide.

2. Copolymère séquencé ou son produit d'hydrogénation, obtenu par un procédé selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO63254119 B
- JP SHO6479212 B
- EP 0857758 A
- JP 2004162650 B

**Non-patent literature cited in the description**

- *Eur. Polym. J.,* 1992, vol. 28 (7), 765